Europäisches Patentamt

(19) European Patent Office

Office européen des brevets

(11) Publication number : **0 345 169 B1**

(12) **EUROPEAN PATENT SPECIFICATION**

(45) Date of publication of patent specification :
04.12.91 Bulletin 91/49

(51) Int. Cl.⁵ : **G01G 21/24, G01G 3/14**

(21) Application number : **89401531.2**

(22) Date of filing : **02.06.89**

(54) **Force sensor for a weighing device.**

(30) Priority : 02.06.88 FR 8807362

(43) Date of publication of application :
06.12.89 Bulletin 89/49

(45) Publication of the grant of the patent :
04.12.91 Bulletin 91/49

(84) Designated Contracting States :
AT BE CH DE ES FR GB GR IT LI LU NL SE

(56) References cited :
WO-A-82/04112
FR-A- 2 112 216
FR-A- 2 581 758
GB-A- 2 049 950
GB-A- 2 149 131

(56) References cited :
PATENT ABSTRACTS OF JAPAN, vol. 8, no.
286 (P-324)[1723], 27th December 1984; &
JP-A-59 150 315
PATENT ABSTRACTS OF JAPAN, vol. 11, no.
207 (P-592)[2654], 4th July 1987; & JP-A-62 27
623

(73) Proprietor : ESSELTE MOREAU S.A.
106 Bis, Avenue Beaurepaire
F-94100 Saint Maur (FR)

(72) Inventor : Sabiron, Gérard
13, rue Alfred de Musset
F-94100 Saint Maur (FR)
Inventor : Blondeau, Jean-Marc
19, rue Marc Sanguier
F-91330 Yerres (FR)

(74) Representative : Rinuy, Santarelli
14, avenue de la Grande Armée
F-75017 Paris (FR)

## Description

The invention concerns a force sensor for a measuring device or cell such as a weighing device.

There are already known force sensors the heart of which comprises a parallelepiped-shape block featuring one or more transverse holes defining in horizontal beams sections of reduced strength whereby the block is similar to a parallelogram deformable in a vertical plane. The deformation in bending of some of these reduced cross-section areas due to the effect of a mass to be weighed is measured, using devices adapted to detect deformation in traction/compression such as strain gauges.

In practice the vertical columns of a block of this kind which the beams connect are respectively and rigidly fixed to a rigid frame and to a receiver plate generally overlying said block.

With a view to weighing a mass accurately attempts have already been made to render these devices as insensitive as possible to the bending/twisting moments created by forces applied off-center to the receiver plate.

Various block geometries have already been proposed to this end, such as those described in the patents FR-2.386.024 and EP-0060766 in particular.

The patent FR-A-2.581.758 proposes a geometry which has the same levels of performance and insensitivity to off-center loads combined with reduced manufacturing cost.

In this latter solution there is a single central hole which defines pairs of reduced cross-section areas of different thickness, the strain gauges being disposed along two of the flexible reduced cross-section areas. For improved adaptability to various applications, there is even a recommendation that the block forming a parallelogram should be made in two parts.

These solutions are satisfactory.

In addition to providing at least a comparable level of performance and insensitivity to off-center loads, an object of the invention is to provide a damping facility and improved impact resistance, together with a low weight.

The invention consists in a force sensor suitable for use in a weighing device comprising a generally parallelepiped-shape block having a length exceeding its height itself exceeding its thickness, one main transverse hole in said block, a fixed vertical column and a mobile vertical column defined by said at least one hole, upper and lower horizontal beams defined by said at least one hole coupling said fixed and mobile vertical columns and defining with them a vertical first deformable parallelogram, a pair of reduced cross-section areas on each horizontal beam, deformation sensors fixed to at least one pair of reduced cross-section areas, a base to which said fixed vertical column is rigidly fixed, a receiver plate, characterized by a damper system by which said receiver plate is coupled to said mobile vertical column, said damper system including a vertical frame forming a second deformable parallelogram elastically deformable in a vertical plane and having less stiffness than said first deformable parallelogram and incorporating a first vertical side fixed with respect to said mobile vertical column and a second vertical side fixed with respect to said receiver plate and mobile without any direct contact with said block, said second vertical side comprising two vertically mobile crossmembers laterally offset relative to said block on either side of same, said second deformable parallelogram further comprising substantially horizontal blade members whereby upper and lower ends of said crossmembers are connected to upper and lower ends of said mobile vertical column, said flexible blade members having a shorter side connected to the mobile vertical column and a larger side connected to both crossmembers and to the receiver plate.

It will be appreciated that the effect of this second elastically deformable parallelogram is to enable vertical displacement of the receiver plate which remains parallel to itself at all times.

Over and above its damper function, this second deformable parallelogram amplifies the vertical movement of the receiver plate under any given load which makes it easier to limit at the lower end the maximum permissible downward vertical movement of the mobile vertical column. To prevent the elastic block being subjected to permanent deformation due to an excessive load it is known in the known devices to provide an adjustable height abutment under the mobile vertical column at a level suited to prevent any excessive downward movement. Given the small vertical movement of this vertical column it is difficult in practice to adjust the level of this abutment optimally, with the risk of either reducing the permissible movement unnecessarily or risking permanent deformation of the reduced cross-section areas of the block. Thanks to the second deformable parallelogram there corresponds to any given load a vertical movement of the vertical plate which is greater than the vertical movement of the mobile column of the block ; as it is then possible to protect the block from any permanent deformation by providing an adjustable height abutment for the receiver plate, it will be understood that the absolute accuracy of the level of this abutment is less critical than for the abutment to be provided under the mobile column of a conventional device, whence this abutment is simplified.

The abutment is advantageously provided under the vertical member of the second deformable parallelogram fixed to the receiver plate.

The substantially horizontal members of the second deformable parallelogram advantageously extend from the mobile vertical column of the block in the same direction as the beams thereof, which makes the device extremely compact.

These blade members may be in the shape of an isosceles trapezium or T-shaped.

Two transverse areas of increased flexibility are preferably provided in the horizontal members to localize the bending areas in a predetermined way. In the case of horizontal blade members these transverse areas are advantageously determined by transverse notches.

The block advantageously comprises a single central hole and may have the features of the device as disclosed in the aforementioned document FR-A-2.581.758.

Nevertheless, according to preferred features of the invention, which may be combined at will :

— each column comprises an external half-column and an internal half-column connected to each other by a plurality of at least two horizontal webs which are of a vertical distance to each other which is substantially less than the vertical distance between the horizontal beams ;

— these webs determine in each vertical column a horizontally extending quadrangular hole ;

— these holes determine in each half-column an area of reduced thickness, the height of which, advantageously about the same for both holes, is preferably larger than the length of the webs ;

— the thickness of such areas is approximately the same as that of the webs, whereas the hole in the fixed vertical column is horizontally longer than the hole in the mobile vertical column ;

— the fixed vertical column is generally shaped as an "H" whereas the mobile vertical column is generally shaped as a "K".

It will be appreciated that, going against the received wisdom of those skilled in the art, the invention proposes to place between the base and the receiver plate flexible members which deform more than the block without this prejudicing the accuracy of measurements.

Objects, characteristics and advantages of the invention will emerge from the following description given by way of non-limiting illustrative example only with reference to the appended drawings.

Figure 1 is an exploded perspective view of a device in accordance with the invention, with the upper part of the receiver plate and the strain gauges omitted to make the diagram clearer.

Figure 2 is a view of it in lateral elevation, with the base, the strain gauges and the upper part of the receiver plate represented schematically in chain-dotted line.

Figure 3 is a plan view of one embodiment of the flexible blade members.

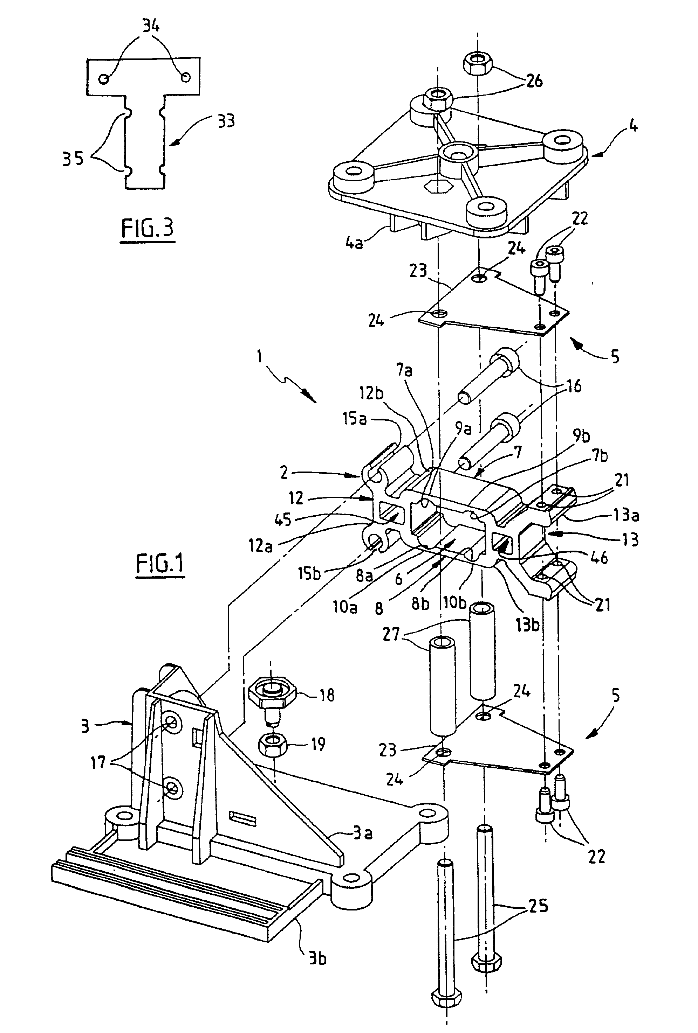

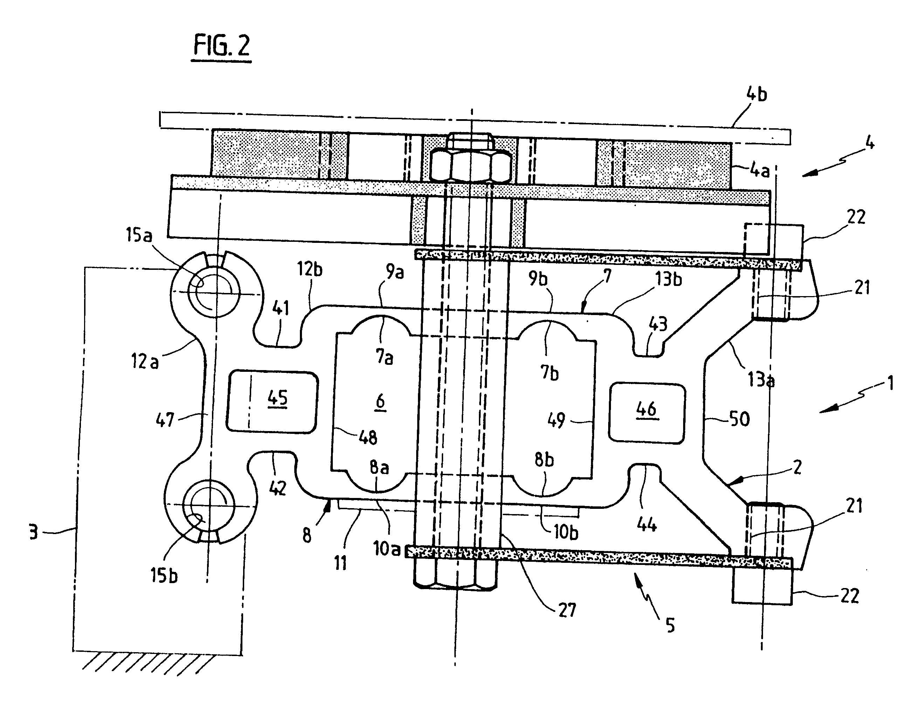

The force sensor 1 in figures 1 and 2 comprises a generally parallelepiped-shaped block 2 of substantially constant thickness, which is higher than it is wide and longer than it is high, a fixed base 3, a receiver plate 4 and damper members 5 between the block 2 and the receiver plate 4.

The block 2 features a transverse central hole 6 of generally rectangular shape, two pairs of grooves 7a and 7b, 8a and 8b being provided on an upper beam 7 and a lower beam 8 of this block so as to form on it pairs of reduced cross-section areas 9a and 9b, 10a and 10b which are the same distance apart and the same thickness on each beam.

The lower reduced cross-section areas 10a and 10b having the same thickness may be different from (for example less than) the equal thicknesses of the upper reduced cross-section areas 9a and 9b.

Strain gauges 11 are fixed to reduced cross-section areas of the same pair, here the areas 10a and 10b.

The beams 7 and 8 are joined to vertical columns 12 and 13 designed to be coupled to the base 3 and to the receiver plate 4, respectively.

The fixed column 12 includes transverse bores 15a and 15b designed to accommodate bolts 16 adapted to be screwed into threaded holes 17 in the base 3.

The base 3 comprises a vertical plate 3a in which the threaded bores 17 are formed and which is carried by a baseplate 3b provided with holes designed to receive members (screws) for fixing it any appropriate type frame (not shown). In this baseplate there is also a bore (not shown) adapted to receive an adjustable height abutment screw 18, optionally fitted with an abutment sensor (not shown) of any known type and adapted to cooperate with an adjuster screw 19 (of the M6 NYLSTOP type, for example).

The mobile column 13 features threaded bores 21 adapted to receive screws 22 (of the M4 × 8 mm socket-head type, for example).

The receiver plate 4 is fixed indirectly to the mobile column 13 of the block 2 by damper members 5 comprising two substantially horizontal flexible blade members 23 fixed to the upper and lower ends of the column 13 by the screws 22.

The blade members 23 have the shape of an isosceles trapezium and are fixed to the mobile column 13 by their shorter end.

At the ends of their longer side they feature holes 24 through which pass long screws 25 which also pass through a hole in each of the blade members 23 and a hole in a lower portion 4a of the receiver plate 4 and are attached to the latter by nuts 26.

Identical tubular crossmembers 27 through which the screws 25 pass longitudinally maintain a constant distance between the longer sides of the flexible blade members 23 with which they constitute a rigid transverse frame fixed under the receiver plate.

The distance between the holes 24 is made sufficient for the crossmembers 27 to be laterally offset relative to the block 2, so that the aforementioned rigid frame has no direct contact with the block 2 and can therefore move freely in the vertical direction with the latter.

The flexible blade members 23 are parallel and horizontal, the height of the tubular crossmembers 27 being equal to the overall height of the mobile column 13.

Each tubular crossmember 27 constitutes with a part of each flexible blade member and the mobile vertical column 13 an elastically deformable vertical parallelogram-shaped frame which has less vertical stiffness than the parallelogram constituted by the block itself.

The two tubular crossmembers 27 and the flexible blade members therefore constitute together two such elastically deformable vertical frames disposed one on either side of the block.

With regard to the block 2, although the columns 12 and 13 project up and down relative to the beams, in particular to increase the stiffness of the coupling with the support 3, the block as a whole has a constant thickness (transverse dimension) which facilitates its manufacture (simple machining operations transversely to the block).

A plate 4b is fixed to the lower part 4a of the receiver plate by any appropriate known means.

The vertical columns or uprights 12 and 13 are advantageously made of two vertical half-columns, i.e. external half-columns 12a and 13a respectively secured to the base 3 and to the dampening means, and internal half-columns 12b and 13b connecting the horizontal beams 7 and 8. These columns are thus substantially shaped as an "H", or a "K" with a hollow middle portion.

Both half-columns 12a-12b, and 13a-13b of each column are connected to each other by a pair of horizontal webs 41 and 42, and 43 and 44 respectively, enclosing a quadrangular hole 45 or 46.

The horizontal dimension of these holes is more than their vertical dimension, in a ratio preferably comprised between 1,1 and 2.

In the disclosed embodiment the vertical dimension of both holes is substantially the same, whereas the horizontal dimension of the hole 45 in the column 12 secured to the base 3 is larger than the horizontal dimension of the other hole.

The vertical distance between the horizontal webs in each column is substantially less than the distance between the horizontal beams (here in a ratio of about 1/2).

It may be noted here that the holes are longer than the webs proper so that the vertical half-columns are provided with areas 47, 48, 49, 50 of reduced thickness vertically along the holes. These areas 47 to 50 have about the same thickness as the horizontal webs 41 to 44.

Despite the fact that the holes 45 and 46 are here horizontally elongated, the above-cited areas 47 to 50 are, in the disclosed embodiment, longer than the webs (here in a ratio of about 1,5 for example).

The external half-column 12a is substantially vertical so that the column 12 is shaped as an "H" and the holes 15a and 15b provided at the ends of same are slotted.

The external half-column 13a is, as disclosed, made of two portions inclined outwardly, upwardly and downwardly respectively so that, in figure 2, the column 13 is shaped as a "K".

Such design allows for the block 2 a low weight, together with some little flexibility, while keeping a high level of performances and actual insensitivity to off-central loads ; this block is in one piece.

In use, a load placed on the plate 4 causes downward bending of the beams 7 and 8 because of the reduced cross-section areas 9a-9b and 10a-10b and therefore downward movement of the mobile column 13 relative to the fixed column.

The flexible blade members 23 and the beams 7 and 8 bend through amounts in constant ratio, by virtue of which the signal from the strain gauges 11 is representative of the weight of the load.

If the load is too heavy the combination of the bending of the flexible blade members 23 and of the beams 7 and 8 brings the rigid frame consisting of the crossmembers 27 and the long sides of the blade members 23 into abutting relationship on the screw 18 the sensor of which signals by any known means the incorrect nature of any measurement that might at this time be provided by the gauges. This height abutment screw protects the block 2 against any excessive deformation. The amplifying nature of the flexible blade members renders the exact adjustment of this screw less critical.

Because of its rigidity the aforementioned frame avoids any spurious torsion of the flexible blade members and reduces the sensitivity of the device to off-center loads.

It goes without saying that the description has been given by way of illustration only and that numerous variations may be put forward without departing from the scope of the invention.

In particlular, the block 2 could be replaced by a block of the type described in the previously mentioned patent FR-2.581.758. It could equally well be a parallelepiped-shaped block of any other known type, with one or more transverse holes.

Also, the flexible blade members could be T-shaped (see figure 3) with the transverse bar coupling the crossmembers 27 by means of holes 34. Two pairs of lateral notches 35 are also advantageously provided at two spaced loactions on the uprights of these T-shapes so as to concentrate in predetermined areas any vertical bending to which these T-shaped blade members are subjected. Notches of this kind may also be provided on the blade members 23.

As another variation, the vertical damper frames could be formed as articulated parallelograms with coil springs at the articulations conferring on them a stable angular position.

## Claims

1. Force sensor suitable for use in a weighing device comprising a generally parallelepiped-shape block (2) having a length exceeding its height, said height exceeding its thickness, one main transverse hole (6) in said block, a fixed vertical column (12) and a mobile vertical column (13) defined by said at least one hole, upper and lower horizontal beams (7, 8) defined by said at least one hole coupling said fixed and mobile vertical columns and defining with them a vertical first deformable parallelogram, a pair of reduced cross-section areas (7a, 7b, 8a, 8b) on each horizontal beam, deformation sensors (11) fixed to at least one pair of reduced cross-section areas, a base (3) to which said fixed vertical column is rigidly fixed, a receiver plate (4), characterized by a damper system (5) by which said receiver plate is coupled to said mobile vertical column, said damper system including a vertical frame (27, 23-33, 13) forming a second deformable parallelogram elastically deformable in a vertical plane and having less stiffness than said first deformable parallelogram and incorporating a first vertical side (13) fixed with respect to said mobile vertical column (13) and a second vertical side (27) fixed with respect to said receiver plate and mobile without any direct contact with said block, said second vertical side comprising two vertically mobile crossmembers (27) offset laterally relative to said block on either side of same and said second deformable parallelogram further comprising substantially horizontal blade members (23) whereby upper and lower ends of said crossmembers are connected to upper and lower ends of said mobile vertical column, said flexible blade members (23, 33) having a shorter side connected to the mobile vertical column and a larger side connected to said crossmembers and to the receiver plate.

2. Sensor according to claim 1, wherein said flexible blade members (23) form an isosceles trapezium a shorter side of which is fixed to said mobile vertical column and a longer side of which is coupled at its ends to said crossmembers.

3. Sensor according to claim 1, wherein said flexible blade members (33) are T-shaped with a transverse bar fixed at its ends to said crossmembers and an upright fixed at its free end to said mobile vertical column.

4. Sensor according to anyone of claims 1 to 3, further comprising two pairs of longitudinally offset notches (35) on said blade members constituting transverse areas of increased flexibility.

5. Sensor according to anyone of claims 1 to 4 characterized by each column (12, 13) comprising an external half-column (12a, 13a) and an internal half-column (12b, 13b) connected to each other by a plurality of at least two horizontal webs (41-44) which are of a vertical distance to each other which is substantially less than the vertical distance between the horizontal beams.

6. Sensor according to claim (5) characterized in that these two webs determine in each vertical column a horizontally extending quadrangular hole (45, 46).

7. Sensor according to claim 6, characterized by said hole determining in each half-column an area (47-50) of reduced thickness.

8. Sensor according to claim 7, characterized by said areas of reduced thickness being of a height which is larger than the length of the webs.

9. Sensor according to claim 7 or claim 8, characterized by said areas of reduced thickness being of approximately the same thickness as the webs.

10. Sensor according to anyone of claims 6 to 9, characterized by said holes (45, 46) being of approximately the same height.

11. Sensor according to anyone of claims 6 to 10, characterized by the fixed vertical column (12) being shaped as an "H" and said mobile vertical column (13) being shaped as a "K" the quadrangular hole (45) in said fixed vertical column (12) being longer than the quadrangular hole (46) in said mobile vertical column.

12. Sensor according to anyone of claims 1 to 11 wherein a first vertical member of said second deformable parallelogram is fixed under said receiver plate and further comprising an adjustable height abutment member under said first vertical member.

13. Sensor according to anyone of claims 1 to 12 wherein said substantially horizontal members of said second deformable parallelogram extend from said mobile vertical column in substantially the same direction as said beams.

## Patentansprüche

1. Kraftsensor, geeignet zur Anwendung in einer Wiegevorrichtung, mit einem allgemein Parallelepiped-förmigen Block (2), der eine Länge hat, die größer ist als seine Höhe, welche größer ist als seine Dicke, mit einem Haupt-Querloch (6) im Block, einer festen vertikalen Säule (12) und einer beweglichen vertikalen Säule (13), definiert durch das wenigstens eine Loch, mit durch das wenigstens eine Loch definierten oberen und unteren horizontalen Balken (7, 8), die die feste und bewegliche vertikale Säule verbinden und mit diesen ein vertikales erstes verformbares Parallelogramm definieren, einem Paar von Bereichen (7a, 7b, 8a, 8b) mit vermindertem Querschnitt an jedem horizontalen Balken, Deformationssensoren (11), die an zumindest einem Paar Bereiche mit vermindertem Querschnitt befestigt sind, einem Sockel (3), an dem die feste vertikale Säule starr befestigt ist, und einer Aufnehmerplatte (4), gekennzeichnet durch ein Dämpfungssystem (5), durch das die Aufnehmerplatte mit der beweglichen vertikalen Säule gekuppelt ist, wobei das Dämpfungssystem einen vertikalen Rahmen (27, 23-33, 13) enthält, der ein zweites verformbares Parallelogramm bildet, welches in einer vertikalen Ebene elastisch verformbar ist und eine geringere Steifigkeit als das erste verformbare Parallelogramm aufweist und eine erste vertikale Seite (13), die bezüglich der beweglichen vertikalen Säule (13) fest ist, und eine zweite vertikale Seite (27) enthält, die bezüglich der Aufnehmerplatte fest ist und ohne irgendeinen direkten Kontakt mit dem Block beweglich ist, wobei die zweite vertikale Seite zwei vertikal bewegliche Querteile (27) aufweist, die seitlich relativ zum Block an beiden Seiten hievon versetzt sind, und das zweite verformbare Parallelogramm weiters im wesentlichen horizontale Blatteile (23, 33) aufweist, wodurch obere und untere Enden der Querteile (27) mit oberen und unteren Enden der beweglichen vertikalen Säule verbunden sind, wobei die flexiblen Blatteile (23, 33) mit einer kürzeren Seite mit der beweglichen vertikalen Säule und mit einer größeren Seite mit den Querteilen und der Aufnehmerplatte verbunden sind.

2. Sensor nach Anspruch 1, bei dem die flexiblen Blatteile (23) ein gleichschenkeliges Trapez bilden, von dem eine kürzere Seite an der beweglichen vertikalen Säule befestigt und eine längere Seite an ihren Enden mit den Querteilen gekuppelt ist.

3. Sensor nach Anspruch 1, bei dem die flexiblen Blatteile (33) T-förmig sind, wobei ein Quersteg an seinen Enden mit den Querteilen und ein Schenkel an seinem freien Ende mit der beweglichen vertikalen Säule fest verbunden sind.

4. Sensor nach einem der Ansprüche 1 bis 3, weiters mit zwei Paaren von in Längsrichtung versetzten Kerben (35) an den Blatteilen, die Querbereiche mit erhöhter Biegsamkeit bilden.

5. Sensor nach einem der Ansprüche 1 bis 4, dadurch gekennzeichnet, daß jede Säule (12, 13) eine äußere Halbsäule (12a, 13a) und eine innere Halbsäule (12b, 13b) aufweist, die miteinander durch mehrere, zumindest zwei horizontale Stege (41-44) verbunden sind, welche in einem vertikalen Abstand voneinander vorliegen, der wesentlich kleiner ist als der vertikale Abstand zwischen den horizontalen Balken.

6. Sensor nach Anspruch 5, dadurch gekennzeichnet, daß diese zwei Stege in jeder vertikalen Säule ein sich horizontal erstreckendes viereckiges Loch (45, 46) bestimmen.

7. Sensor nach Anspruch 6, dadurch gekennzeichnet, daß das Loch in jeder Halbsäule einen Bereich (47-50) von verminderter Dicke bestimmt.

8. Sensor nach Anspruch 7, dadurch gekennzeichnet, daß die Bereiche von verminderter Dicke eine Höhe haben, die größer ist als die Länge der Stege.

9. Sensor nach Anspruch 7 oder 8, dadurch gekennzeichnet, daß die Bereiche von verminderter Dicke ungefähr gleich dick wie die Stege sind.

10. Sensor nach einem der Ansprüche 6 bis 9, dadurch gekennzeichnet, daß die Löcher (45, 46) ungefähr gleich hoch sind.

11. Sensor nach einem der Ansprüche 6 bis 10, dadurch gekennzeichnet, daß die feste vertikale Säule (12) in Form eines "H" und die bewegliche vertikale Säule (13) in Form eines "K" ausgebildet ist, wobei das viereckige Loch (45) in der festen vertikalen Säule (12) länger ist als das viereckige Loch (46) in der beweglichen vertikalen Säule.

12. Sensor nach einem der Ansprüche 1 bis 11, bei dem ein erstes vertikales Glied des zweiten verformbaren Parallelogramms unter der Aufnehmerplatte befestigt ist, und weiters mit einem verstellbaren Höhenanschlagglied unter dem ersten vertikalen Glied.

13. Sensor nach einem der Ansprüche 1 bis 12, bei dem die im wesentlichen horizontalen Glieder des zweiten verformbaren Parallelogramms von der beweglichen vertikalen Säule im wesentlichen in derselben Richtung wie die Balken verlaufen.

## Revendications

1. Capteur de force convenant à une utilisation dans un appareil de pesage, comportant un bloc (2) de forme globalement parallélépipédique ayant une longueur dépassant sa hauteur, ladite hauteur dépassant son épaisseur, un trou transversal principal (6) dans ledit bloc, une colonne verticale (12) et une colonne verticale mobile (13) définies par ledit, au moins un, trou, des poutres horizontales supérieure et inférieure (7, 8) définies par ledit, au moins un, trou couplant lesdites colonnes verticales fixe et mobile et définissant avec elles un premier parallélogramme déformable vertical, deux zones (7a, 7b, 8a, 8b) de section transversale réduite sur chaque poutre horizontale, des capteurs (11) de déformation fixés à au moins une paire de zones de section transversale réduite, une embase (3) à laquelle ladite colonne verticale fixe est fixée rigidement, une plaque réceptrice (4), caractérisé par un système amortisseur (5) par lequel ladite plaque réceptrice est couplée à ladite colonne verticale mobile, ledit système amortisseur comprenant un bâti vertical (27, 23-33, 13) formant un second parallélogramme déformable élastiquement dans un plan vertical et ayant une raideur inférieure à celle dudit premier parallélogramme déformable, et comprenant un premier côté vertical (13) fixe par rapport à ladite colonne verticale mobile (13) et un second côté vertical (27) fixe par rapport à ladite plaque réceptrice et mobile sans contact direct quelconque avec ledit bloc, ledit second côté vertical comprenant deux traverses (27) mobiles verticalement, décalées latéralement par rapport audit bloc sur chaque côté de celui-ci et ledit second parallélogramme déformable comportant en outre des éléments à lames sensiblement horizontales (23) par lesquels des extrémités supérieure et inférieure desdites traverses sont reliées à des extrémités supérieure et inférieure de ladite colonne verticale mobile, lesdits éléments à lames flexibles (23, 33) ayant un petit côté relié à la colonne verticale mobile et un grand côté relié auxdites traverses et à la plaque réceptrice.

2. Capteur selon la revendication 1, dans lequel lesdits éléments à lames flexibles (23) forment un trapèze isocèle dont le petit côté est fixé à ladite colonne verticale mobile et le grand côté est couplé par ses extrémités auxdites traverses.

3. Capteur selon la revendication 1, dans lequel lesdits éléments à lames flexibles (33) ont une forme en T avec une barre transversale fixée par ses extrémités auxdites traverses et une jambe fixée par son extrémité libre à ladite colonne verticale mobile.

4. Capteur selon l'une quelconque des revendications 1 à 3, présentant en outre deux paires d'encoches (35) décalées longitudinalement sur lesdits éléments à lames, constituant des zones transversales de flexibilité accrue.

5. Capteur selon l'une quelconque des revendications 1 à 4, caractérisé en ce que chaque colonne (12, 13) comprend une demi-colonne extérieure (12a, 13a) et une demi-colonne intérieure (12b, 13b) reliées entre elles par un groupe d'au moins deux voiles horizontaux (41-44) qui sont à une distance verticale l'un de l'autre sensiblement inférieure à la distance verticale entre les poutres horizontales.

6. Capteur selon la revendication 5, caractérisé en ce que ces deux voiles déterminent dans chaque colonne verticale un trou quadrangulaire (45, 46) s'étendant horizontalement.

7. Capteur selon la revendication 6, caractérisé en ce que ledit trou détermine dans chaque demi-colonne une zone (47-50) d'épaisseur réduite.

8. Capteur selon la revendication 7, caractérisé en ce que lesdites zones d'épaisseur réduite ont une hauteur qui est plus grande que la longueur des voiles.

9. Capteur selon la revendication 7 ou la revendication 8, caractérisé en ce que lesdites zones d'épaisseur réduite ont approximativement la même épaisseur que les voiles.

10. Capteur selon l'une quelconque des revendications 6 à 9, caractérisé en ce que lesdits trous (45, 46) ont approximativement la même hauteur.

11. Capteur selon l'une quelconque des revendications 6 à 10, caractérisé en ce que la colonne verticale fixe (12) présente la forme d'un "H" et ladite colonne verticale mobile (13) présente la forme d'un "K", le trou quadrangulaire (45) dans ladite colonne verticale fixe (12) étant plus long que le trou quadrangulaire (46) dans ladite colonne verticale mobile.

12. Capteur selon l'une quelconque des revendications 1 à 11, dans lequel un premier élément vertical dudit second parallélogramme déformable est fixé sous ladite plaque réceptrice, et comportant en outre un élément de butée réglable en hauteur sous ledit premier élément vertical.

13. Capteur selon l'une quelconque des revendications 1 à 12 ; dans lequel lesdits éléments sensiblement horizontaux dudit second parallélogramme déformable s'étendent à partir de ladite colonne verticale mobile sensiblement dans la même direction que lesdites poutres.

FIG.3

FIG.1

FIG. 2